# EUROPEAN PATENT SPECIFICATION

(11) **EP 4 199 191 B1**
(45) Date of publication and mention of the grant of the patent: **06.05.2026**
(21) Application number: 21917930.6
(22) Date of filing: 23.12.2021
(51) Int. Cl.: H01M 10/6551, H01M 10/653, H01M 10/647, H01M 50/242, H01M 50/211

(54) **BATTERY MODULE AND BATTERY PACK COMPRISING SAME**
BATTERIEMODUL UND BATTERIEPACK DAMIT
MODULE DE BATTERIE ET BATTERIE LE COMPRENANT

(30) Priority: 11.01.2021 KR 20210003181; 24.05.2021 KR 20210066459
(43) Date of publication of application: 21.06.2023
(73) Proprietor: LG Energy Solution, Ltd., Seoul 07335 (KR)
(72) Inventor: PARK, Subin, Daejeon 34122 (KR); SEONG, Junyeob, Daejeon 34122 (KR); PARK, Won Kyoung, Daejeon 34122 (KR); HAN, Honggoo, Daejeon 34122 (KR)
(74) Representative: Goddar, Heinz J.
(86) International application number: PCT/KR2021/019683
(87) International publication number: WO 2022/149768

(56) References cited:
- EP-A1- 2 955 780
- EP-A1- 3 758 090
- WO-A1-2019/167689
- KR-A- 20170 019 041
- KR-A- 20180 113 419
- KR-A- 20190 129 555
- KR-A- 20200 021 609
- KR-B1- 101 902 447

## Description

### [TECHNICAL FIELD]

The present disclosure relates to a battery module and a battery pack including the same, and more particularly to a battery module that improves the cooling performance of battery cells and reduces the cooling deviation between battery cells and a battery pack including the same.

### [BACKGROUND]

Along with the increase of technology development and demands for mobile devices, the demand for batteries as energy sources is increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle or large-sized battery module is preferably manufactured so as to have as small a size and weight as possible. Consequently, a prismatic battery, a pouch-shaped battery or the like, which can be stacked with high integration and has a small weight relative to capacity, is mainly used as a battery cell of the middle or large-sized battery module. Meanwhile, in order to protect the battery cell stack from external impact, heat or vibration, the battery module may include a module frame which is opened in its front and rear sides and houses the battery cell stack in an internal space.

Considering that the temperature of the battery cell is one of the factors that limit the output of the battery, the local temperature rise that occurs in the battery cell is highly likely to limit the output of the battery early, and thus it needs to be improved. Additionally, as the battery module has become larger in recent years, the number of battery cells stacked in the module has increased, the cooling deviation between the battery cells is further deepened.

Therefore, there is a need to develop a battery module that improves the cooling performance against heat generated in the battery cell stack and reduces the cooling deviation between battery cells, and a battery pack including the same. EP 3 758 090 A1, EP 2 955 780 and WO 2019/167689 A1 disclose battery packs having cooling plates below a stack of cells, wherein refrigerant can flow through cooling flow paths formed in channels extending through, and contained by, these cooling plates.

### [DETAILED DESCRIPTION OF THE INVENTION]

### [Technical Problem]

It is an object of the present disclosure to provide a battery module that improves the cooling performance of battery cells and reduces the cooling deviation between battery cells, and a battery pack including the same.

The objects of the present disclosure are not limited to the aforementioned objects, and other objects which are not described herein should be clearly understood by those skilled in the art from the following detailed description and the accompanying drawings.

### [Technical Solution]

According to one aspect of the present disclosure, there is provided a battery module comprising: a battery cell stack including a plurality of battery cells stacked in a first direction; a first heat sink located at a lower part of the battery cell stack; a first thermal conductive resin layer located between the battery cell stack and the first heat sink; and an exterior member surrounding the outer surface of the battery cell stack, wherein the battery cell stack comprises at least one cooling fin located between battery cells adjacent to each other among the plurality of battery cells, and wherein the first thermal conductive resin layer and the first heat sink are located between the exterior member and a lower surface of the battery cell stack.

An outer surface of the exterior member of the battery module may be exposed.

The exterior member presses the upper and lower surfaces of the battery cell stack in a second direction, and the second direction may be perpendicular to the first direction.

The second direction may be a width direction of the plurality of battery cells.

The exterior member may be made of an elastic material.

The exterior member may be made of an elastic material.

The exterior member may be formed such that the film of the elastic material wraps the outer surface of the battery cell stack.

The exterior member is made of a heat-shrinkable tube, and front and back surfaces of the heat-shrinkable tube may be opened.

A lower side surface of the cooling fin is in contact with the first thermal conductive resin layer.

A first adhesive layer may be located between the cooling fins and the battery cell.

The battery module further comprises compression pads located on both side surfaces of the battery cell stack, and the compression pad may be located between the exterior member and the outside surface of the battery cell stack.

A second adhesive layer may be located between the compression pad and the battery cell.

The first heat sink comprises a cooling flow path through which refrigerant flows, and the first cooling flow path and the first thermal conductive resin layer is in contact with each other.

The battery module further comprises a second heat sink located on the upper part of the battery cell stack and a second thermal conductive resin layer located between the battery cell stack and the second heat sink, and the second thermal conductive resin layer and the second heat sink may be located between the exterior member and an upper surface of the battery cell stack.

An upper side surface of the cooling fin may be in contact with the second thermal conductive resin layer.

According to another aspect of the present disclosure, there is provided a battery pack in which the above-mentioned battery module is mounted on a pack frame, and an outer surface of the exterior member and the pack frame are in contact with each other.

The pack frame may include a lower pack frame on which at least two of the battery modules are mounted and an upper pack frame for covering the upper parts of the at least two battery modules, and may include a plurality of first beams extending from one side surface of the lower pack frame towards the other side surface.

The battery module may be mounted between the first beams that are adjacent to each other among the plurality of first beams.

The lower pack frame may further include a plurality of second beams perpendicular to the first beam, and the plurality of second beams may be respectively located between one surface of the battery module and a side surface of the lower pack frame,

One surface of the second beam may be in contact with an electrode lead protruding from one surface of the battery module.

An insulating coating layer may be formed on one surface of the second beam.

### [Advantageous Effects]

According to embodiments of the present disclosure, a battery module which includes an exterior member surrounding the outer surface of the structure in which the thermal conductive resin layer and the heat sink are located at a lower part of the battery cell stack, thereby improving the cooling performance of battery cells and reducing the cooling deviation between battery cells, and a battery pack including the same can be provided.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a battery module according to an embodiment of the present disclosure;
Fig. 2 is an exploded perspective view of the battery module of Fig. 1;
Fig. 3 is an exploded perspective view of a battery cell stack included in the battery module of Fig. 1;
Fig. 4 is a diagram showing a cross-section taken along the cutting line A-A of Fig. 1;
Fig. 5 is an enlarged view showing a lower part of the cross section of Fig. 4;
Fig. 6 is a perspective view of a battery pack in which the battery module of Fig. 1 is mounted;
Fig. 7 is an exploded perspective view of the battery pack of Fig. 6;
Fig. 8 is a top view of a region A in a state in which the upper pack frame of Fig. 6 is removed;
Fig. 9 is a perspective view of a battery module according to another embodiment of the present disclosure;
Fig. 10 is an exploded perspective view of the battery module of Fig. 9;
Fig. 11 is a diagram showing a cross-section taken along the cutting line B-B of Fig. 9;
Fig. 12 is an exploded perspective view of the battery pack in which the battery module of Fig. 9 is mounted;
Fig. 13 is a perspective view of a battery module according to a comparative example;
Fig. 14 is an exploded perspective view of a battery pack in which the battery module of Fig. 13 is mounted;
Fig. 15 is a perspective view showing a state in which the components of the battery pack of Fig. 14 are assembled; and
Fig. 16 is a diagram showing a part of a cross section taken along the cutting line a-a of Fig. 15.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Hereinafter, the battery module according to one embodiment of the present disclosure will be described. However, the description herein is made based on the front surface among the front and rear surfaces of the battery module, without being necessarily limited thereto, and even in the case of the rear surface, a description may be given with same or similar contents.

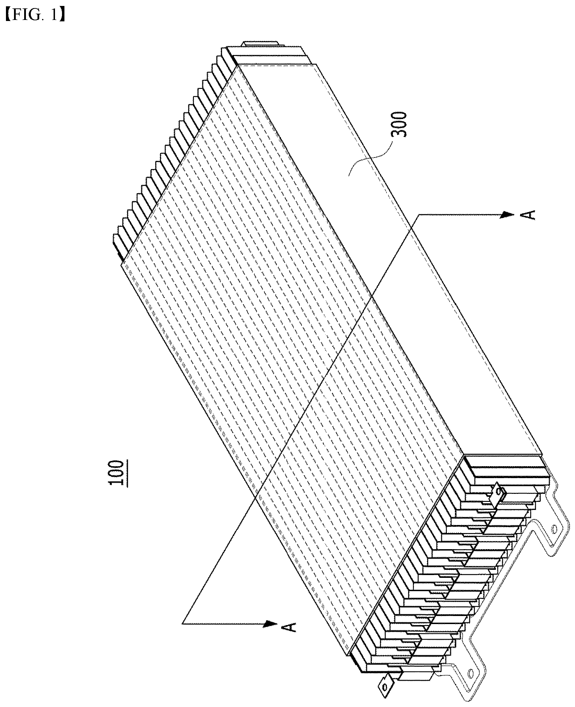

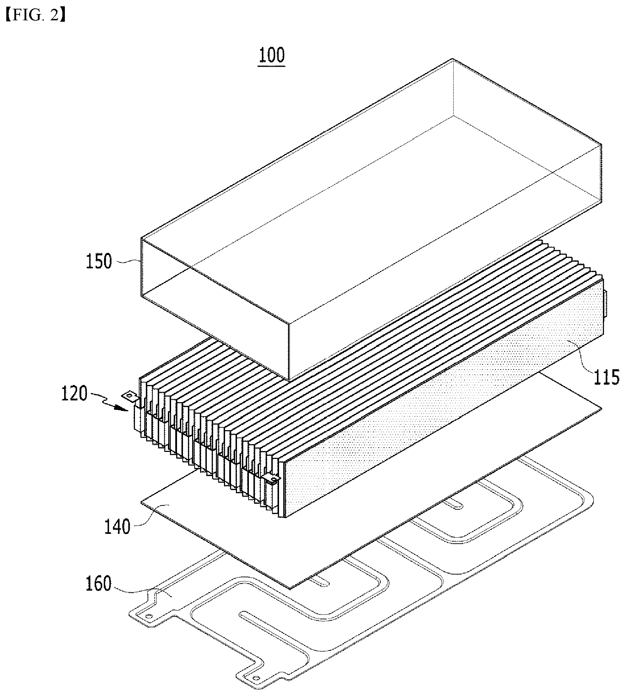

Fig. 1 is a perspective view of a battery module according to an embodiment of the present disclosure. Fig. 2 is an exploded perspective view of the battery module of Fig. 1.

Referring to Figs. 1 and 2, a battery module 100 according to one embodiment of the present disclosure includes a battery cell stack 120 in which a plurality of battery cells 110 stacked along a first direction are stacked; a heat sink 160 located at a lower part of the battery cell stack 120; a thermal conductive resin layer 140 located between the battery cell stack 120 and the heat sink 160; and an exterior member 150 surrounding the outer surface of the battery cell stack 120. Additionally, the battery module 100 includes a sensing member (not shown) that covers the front and rear surfaces of the battery cell stack 120.

Further, the thermal conductive resin layer 140 and the heat sink 160 are located between the exterior member 150 and the lower surface of the battery cell stack 120. Here, while the lower surface of the battery cell stack 120 being in direct contact with the thermal conductive resin layer 140, the thermal conductive resin layer 140 can be in contact with the heat sink 160. That is, the heat generated in the battery cell stack 120 can be directly transferred to the thermal conductive resin layer 140, and the transferred heat can be transferred to the heat sink 160 and cooled.

Thereby, the heat generated in the battery cell 110 is transferred to the thermal conductive resin layer 140 in direct contact with the lower surface of the battery cell stack 120, and is cooled by the heat sink 160, so that the cooling performance of the battery module 100 can be improved, and a cooling deviation between the battery cells 110 can also be reduced. Additionally, the lifespan of the battery module 100 can be further improved.

The heat sink 160 includes a cooling flow path through which refrigerant flows, and the cooling flow path may include an outlet and an inlet formed on one side of the heat sink 160, and a recessed part that connects the outlet and the inlet and is a path through which the refrigerant flows. The outlet may allow the refrigerant included in the cooling flow path to be discharged to the outside, and the inlet can supply the refrigerant in the cooling flow path.

Thereby, the battery module 100 according to the present embodiment includes a heat sink 160, so that the weight of the heat sink 160 can be reduced, and a temperature deviation between the battery modules 100 can also be reduced. Further, the structural rigidity of the battery module 100 can be increased, and a handling function of the battery module 100 can be improved before being mounted in pack frames 1200 and 1300 described later.

In one example, the thermal conductive resin layer 140 can be formed by coating a thermal conductive resin on the lower surface of the battery cell stack 120 or the upper surface of the heat sink 160. That is, as the previously applied thermal conductive resin is cured, the thermal conductive resin layer 140 can be formed. Thereby, as the thermal conductive resin is cured, the lower surface of the battery cell stack 120 and the heat sink 160 can be stably fixed to each other.

In one example, the heat conductive resin layer 140 is made of a heat transfer member including a heat conductive material, and the thermal conductive resin layer 140 can be configured as an upper cover of the heat sink 160. Thereby, the heat sink 160 may have a structure in which the cooling flow path through which refrigerant flows and the thermal conductive resin layer 140 may be in direct contact with each other.

Thereby, the heat generated in the battery cell 110 is directly cooled by the thermal conductive resin layer 140 and the heat sink 160, so that the cooling performance of the battery module 100 is further improved, and the cooling deviation between the battery cells 110 can be further reduced.

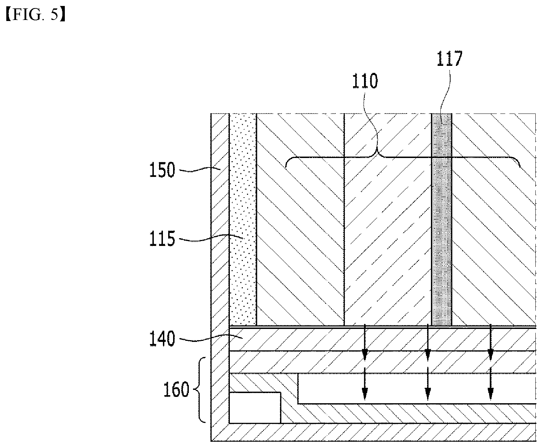

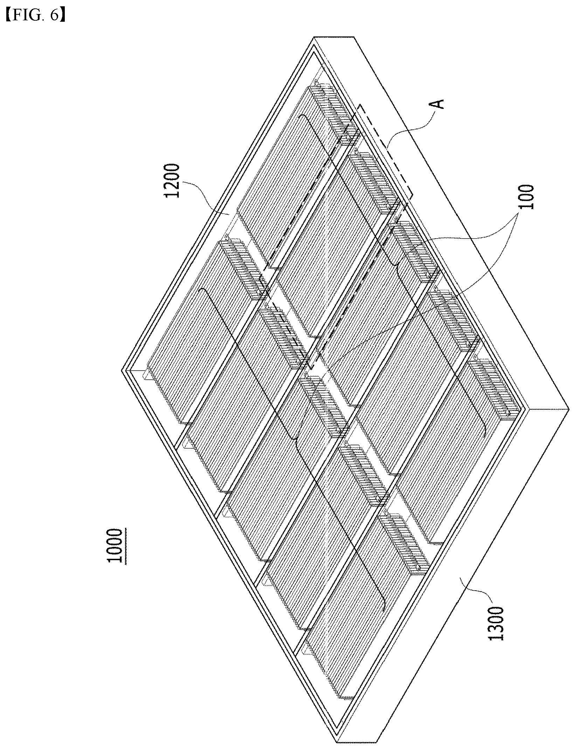

Referring to Figs. 5 and 6, the exterior member 150 may surround the outer surface of the battery cell stack 120 together with the thermal conductive resin layer 140 and the heat sink 160. Here, the exterior member 150 is a member composed of both side surfaces and upper and lower surfaces, and can be opened in the front and rear surfaces. Thereby, both side surfaces and upper and lower surfaces of the battery cell stack 120 can be covered by the exterior member 150, and the front and rear surfaces thereof can be opened.

Further, both side surfaces and upper and lower surfaces of the exterior member 150 may have a size corresponding to the size of the outer surface of the battery cell stack, respectively. In one example, both side surfaces of the exterior member 150 may have the same size as or smaller than the side surface of the battery cell stack 120. Further, the upper and lower surfaces of the exterior member 150 may have a size equal to or smaller than the upper and lower surfaces of the battery cell stack 120.

Further, the exterior member 150 may press the battery cell stack 120 in a predetermined direction and surround the battery cell stack 120. That is, the exterior member 150 can press the battery cells 110 included in the battery cell stack 120 in a direction toward the inside of the battery module 100. More specifically, the exterior member 150 presses the battery cell stack 120 in the first direction, and the first direction may be a width direction of the battery module 100, which may be identical to the stacking direction of the plurality of battery cells 110 in the battery cell stack 120. Further, the exterior member 300 presses the upper and lower surfaces of the battery cell stack in the second direction, and the second direction may be perpendicular to the first direction, which may be identical to the width direction of the plurality of battery cells 110.

This can prevent the swelling phenomenon of the battery cell and improve the dimensional stability of the battery module. Further, through the process in which the battery cell stack 120 is wrapped in the exterior member 150, the battery cell stack 120 is simultaneously pressed, whereby a process of separately pressing the battery cell stack 120 is not required, and thus the process and the production line can be simplified.

Further, in a state where the exterior member 150 wraps the battery cell stack 120, the outer surface of the exterior member 150 can be exposed. That is, when the battery module 100 is mounted on the pack frames 1200 and 1300 of the battery pack in a process described later, the exterior member 150 can be in contact with the pack frames 1200 and 1300.

In one example, the exterior member 150 can be made of an elastic material. The elastic material can be made of at least one of a material such as polyethylene (PE) and polytetrafluoroethylene (PTFE). Here, the exterior member 150 can be formed by wrapping the outer surface of the battery cell stack by the elastic film or heat-shrinkable tube. Here, the front and rear surfaces of the heat-shrinkable tube may be opened. However, the present disclosure is not limited thereto, and any material having elasticity capable of sufficiently pressing the battery cells 110 included in the battery cell stack 120 while effectively absorbing external impacts can be applied without limitation.

Thereby, in the present embodiment, the exterior member 150 may prevent the swelling phenomenon of the battery cell and improve the dimensional stability of the battery module. In addition, the exterior member 150 has an advantage in that it has elasticity in itself, and can minimize deformation according to a change in the volume of the battery cell 110.

Further, the outer surface of the battery cell stack 120 may be attached to the inner surface of the exterior member 150, respectively. Here, the elastic material included in the exterior member 150 may have an adhesive force by itself. Further, the exterior member 150 and the battery cell stack 120 can be fixed through a frictional force between the inner surface of the exterior member 150 and the outer surface of the battery cell stack 120.

Further, a separate adhesive layer can be formed between the exterior member 150 and the battery cell stack 120. In one example, each of the adhesive layers may be formed of a tape or may be coated with an adhesive binder. More preferably, the adhesive layer is coated with an adhesive binder or made of a double-sided tape, so that the battery cell stack 120 and the exterior member 150 can be easily fixed. However, the present disclosure is not limited thereto, and any material having adhesive performance capable of fixing between the battery cells 110 or between the battery cells 110 and the exterior member 150 can be applied without limitation. Thereby, the battery cell stack 120 may be stably housed in the exterior member 150.

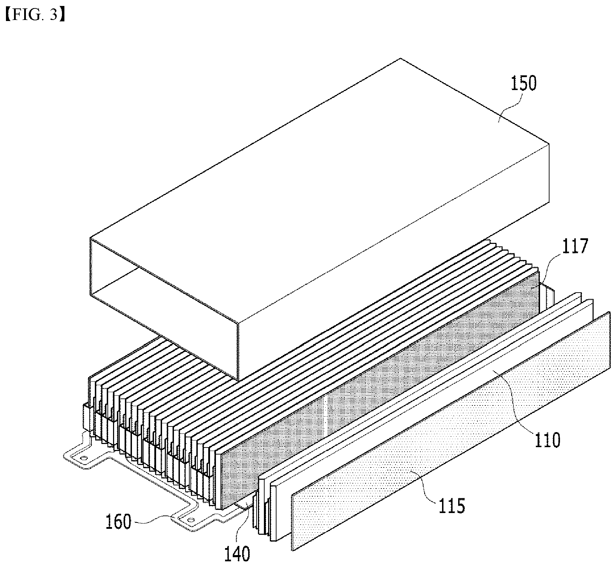

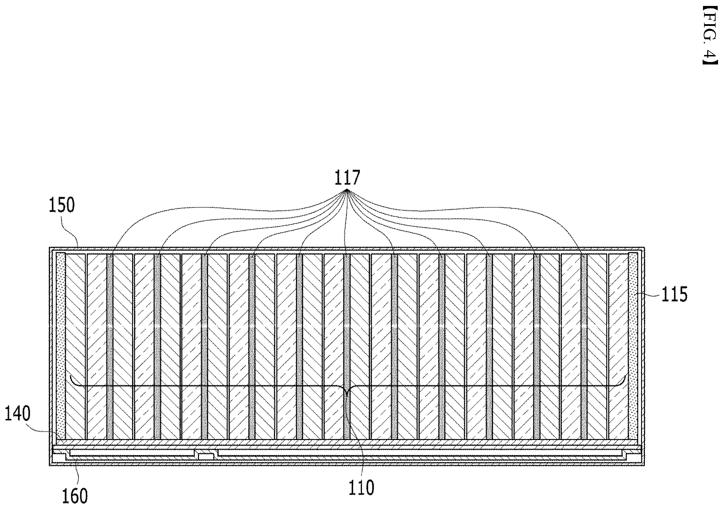

Fig. 3 is an exploded perspective view of a battery cell stack included in the battery module of Fig. 1. Fig. 4 is a diagram showing a cross-section taken along the cutting line A-A of Fig. 1.

Referring to Figs. 3 and 4, the battery cell stack 120 includes a plurality of battery cells 110 stacked in a first direction. Here, the battery cell 110 is preferably a pouch-type battery cell. The battery cell 110 may be manufactured by housing the electrode assembly in a pouch case made of a laminated sheet including a resin layer and a metal layer, and then heat-sealing a sealing part of the pouch case. Such a battery cell 110 can be composed of a plurality of numbers, and the plurality of battery cells 110 can form a stacked battery cell stack 120 to be electrically connected to each other.

Further, the battery cell stack 120 includes at least one cooling fin 117 located between battery cells adjacent to each other among the plurality of battery cells 110, and a lower side surface of the cooling fin 117 can be in contact with the thermal conductive resin layer 140.

Here, the heat generated in the battery cell 110 is directly transferred to the cooling fin 117, and the heat of the cooling fin 117 and/or the battery cell 110 can be immediately transferred to the thermal conductive resin layer 140. Thereby, the battery module 100 in the present embodiment can more efficiently transfer the heat generated in the battery cell 110 to the outside quickly. Further, the cooling deviation according to the position of the battery cell 110 can be reduced.

Further, the cooling fin 117 is located between battery cells 110 adjacent to each other among the plurality of battery cells 110, thereby preventing the swelling phenomenon of the battery cells 110 occurring in the thickness direction of the battery cells 110, and improving the dimensional stability of the battery module 100.

Further, in the process of wrapping the outer surface of the battery cell stack 120 with the exterior member 150, the exterior member 150 presses the battery cell stack 120 in the width direction of the battery cell 110, which is the second direction. Here, the cooling fin 117 has an advantage of supporting the pressure applied to the battery cell stack 120 in the second direction, and minimizing damage to the battery cell 110 by the exterior member 150. That is, it is possible to prevent damage that occurs in the width direction of the battery cells 110 included in the battery module 100 according to the present embodiment.

Further, the cooling fins 117 and the battery cells 110 adjacent to each other can be fixed to each other by the surface pressure applied from the exterior member 150. Thereby, the cooling fins 117 and the battery cells 110 adjacent to each other can be stably fixed without a separate adhesive layer.

Further, a first adhesive layer may be further included between the cooling fins 117 and the battery cells 110 adjacent to each other. Thereby, both side surfaces of the cooling fins 117 can be more stably fixed between at least two battery cells 110 adjacent to each other.

In one example, the first adhesive layer can be formed by an adhesive member such as a double-sided tape or an adhesive. Here, it is more preferable that the adhesive member includes a thermal conductive material. However, the first adhesive layer is not limited to the contents described above, and is not limited as long as it is a material having adhesive performance capable of mutually fixing the battery cells 110 and the cooling fins 117.

Thereby, the battery module 100 of this embodiment can improve the rigidity and energy density in the first direction (stacking direction) of the battery cell stack 120 because the battery cell 110 and the cooling fin 117 can be mutually joined.

Referring to Figs. 2 to 4, the battery module 100 according to the present embodiment may be configured such that the compression pad 115 is located between the exterior member 150 and the outer surface of the battery cell stack 120. Here, the compression pad 115 may extend along the outer surface of the battery cell stack 120. Further, the compression pad 115 may have a size equal to or smaller than that of the outer surface of the battery cell stack 120.

In one example, the compression pad 115 may be a pad made of a polyurethane material. However, the present disclosure is not limited thereto, and any material capable of absorbing a change in volume during expansion of the battery cell 110 can be applied.

Thereby, the compression pad 115 easily absorbs the expansion generated in the battery cells 110 included in the battery cell stack 120, and so the compression pad 115 can assist that the exterior member 150 presses the outer surface of the battery cell stack 120.

Further, the compression pad 115 and the battery cell 110 can be fixed to each other by a surface pressure applied from the exterior member 150. Thereby, the compression pad 115 and the battery cell 110 can be stably fixed to each other without a separate adhesive layer.

Further, a second adhesive layer can be located between the compression pad 115 and the battery cell 110. In one example, the second adhesive layer can be formed by an adhesive member such as a double-sided tape or an adhesive. However, the second adhesive layer is not limited to the contents described above, and is not limited as long as it is a material having adhesive performance capable of mutually fixing the battery cell 110 and the compression pad 115.

Thereby, in the battery module 100 of the present embodiment, the battery cell 110 and the compression pad 115 can be joined to each other, so that the rigidity and energy density in the first direction (stacking direction) of the battery cell stack 120 can be further improved.

Fig. 5 is an enlarged view showing a lower part of the cross section of Fig. 4.

Referring to Figs. 4 and 5, in the battery module 100 according to the present embodiment, the heat generated in the battery cell 110 is directly transferred to the thermal conductive resin layer 140 in contact with the lower part of the battery cell 110. Further, the heat transferred to the thermal conductive resin layer 140 can be directly transferred to the heat sink 160 in contact with the lower part of the thermal conductive resin layer 140, and the heat transferred to the heat sink 160 can be transferred to the outside. Thereby, in the battery module 100 according to the present embodiment, the heat transfer path is reduced as compared with the conventional case, and the exterior member 150 is not included in the heat transfer path, so that the cooling performance can be improved.

Further, in the present embodiment, the battery module 100 has a cooling fin 117 located in the battery cell 110, heat generated in the battery cell 110 is transferred to the cooling fin 170 in contact with one surface of the battery cell 110, and can be transferred to the thermal conductive resin layer 140. Thereby, the battery module 100 according to the present embodiment can more efficiently transfer the heat generated in the battery cell 110 to the outside quickly, and can further improve the cooling performance.

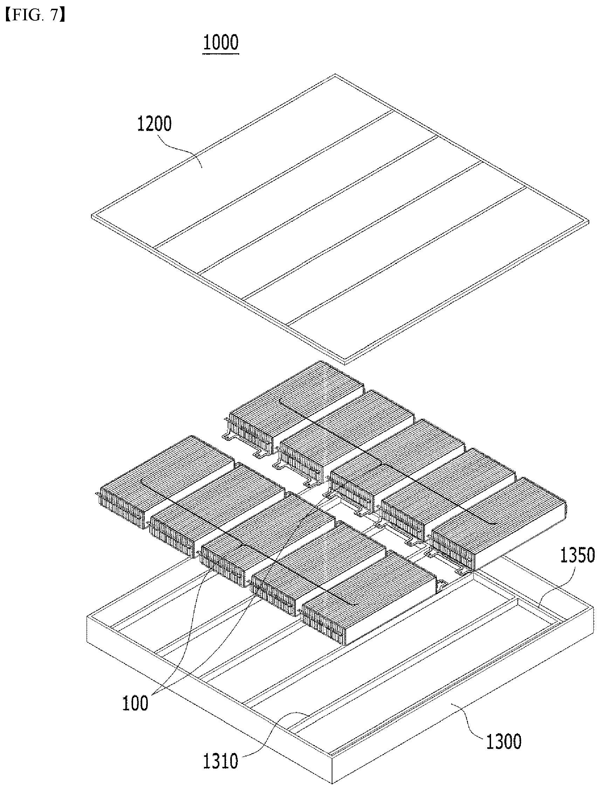

Fig. 6 is a perspective view of a battery pack in which the battery module of Fig. 1 is mounted. Fig. 7 is an exploded perspective view of the battery pack of Fig. 6.

Referring to Figs. 6 and 7, the battery pack 1000 according to another embodiment of the present disclosure includes the battery module 100 described above. Meanwhile, one or more of the battery modules 100 can be packaged in the pack frames 1200 and 1300 to form the battery pack 1000.

More specifically, in the battery pack 1000 of the present embodiment, the battery module 100 is mounted on the pack frames 1200 and 1300, and the outer surface of the exterior member 150 and the pack frames 1200 and 1300 are in contact with each other. Here, the pack frames 1200 and 1300 include a lower pack frame 1200 on which at least two battery modules 100 are mounted and an upper pack frame 1200 for covering the upper part of the at least two battery modules 100.

Thereby, the battery pack 1000 according to the present embodiment does not include a separate thermal conductive resin layer and a heat sink, which can lead to a reduction in the weight of the battery pack 1000. Further, the battery module 100 included in the battery pack 1000 can individually perform a cooling system, which is advantageous in that the temperature dispersion can be centralized.

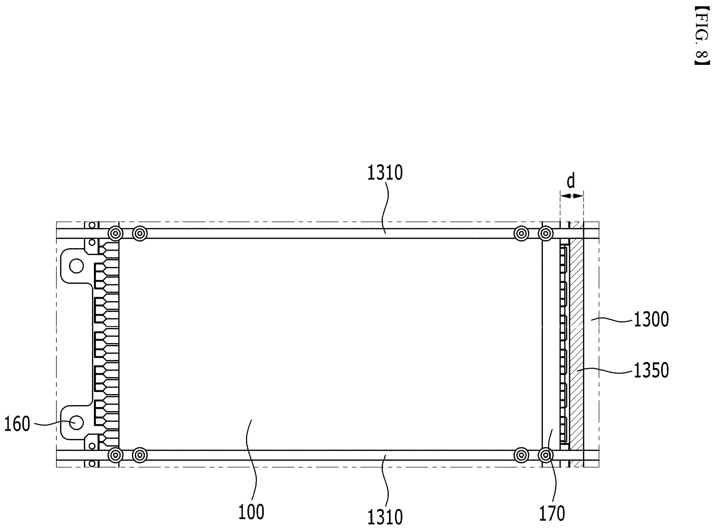

Fig. 8 is a top view of a region A in a state in which the upper pack frame of Fig. 6 is removed.

Referring to Fig. 8, the battery pack 1000 according to another embodiment of the present disclosure may include a plurality of first beams 1310 extending from one side surface of the lower pack frame 1300 toward the other side surface. Further, the battery module 100 mounted on the lower pack frame 1300 may be mounted between the first beams 1310 adjacent to each other among the plurality of first beams 1310. At this time, the battery module 100 may have both side surfaces of the battery module 100 in contact with the first beam 1310 in the lower pack frame 1300.

Thereby, the battery pack 1000 according to the present embodiment can prevent the swelling phenomenon of the battery cells that occur in the width direction of the battery module 100 by the first beam 1310 on both side surfaces of the battery module 100 and can improve the dimensional stability of the battery module.

Further, the lower pack frame 1300 further includes a plurality of second beams 1350 perpendicular to the first beam 1310, and the plurality of second beams 1350 can be respectively located between one surface of the battery module 100 and a side surface of the lower pack frame 1300. Here, the second beam 1350 may be smaller than or equal to the distance d between one surface of the battery module 100 and the side surface of the lower pack frame 1300. Here, one surface of the battery module 100 adjacent to the second beam 1350 may be a surface opposite to the surface from which the inlet and the outlet of the heat sink 160 protrude.

Further, one surface of the second beam 1350 may be in contact with an electrode lead protruding from one surface of the battery module 100 .

In one example, the second beam 1350 may be made of an insulating material, but may be made of a plastic material having a predetermined rigidity.

In another example, the second beam 1350 is made of the same material as the first beam 1310, and an insulating coating layer may be formed on one surface of the second beam 1350. Here, the insulating coating layer may be formed by powder coating an insulating material on at least one surface of the second beam 1350. However, the coating method of the insulating coating layer is not limited thereto, and various methods can be applied. Further, the insulating material may be made of a material such as rubber or urethane foam. However, the insulating material is not limited thereto, and any material having a predetermined insulating property can be applied.

Therefore, in the battery pack 1000 according to the present embodiment, external insulation of the electrode leads of the battery module 100 can be performed through the second beam 1350. That is, the battery module 100 does not require a separate end plate coupled to the front and rear surfaces of the battery cell stack, and the electrode lead can be sufficiently insulated from the outside by the second beam 1350.

Thereby, the battery module 100 can omit the end plate, and thus can prevent damage occurring between the end plate and the electrode lead when assembling the exterior member 150. That is, the battery pack 1000 according to the present embodiment can prevent damage occurring in the longitudinal direction of the battery cells 110 included in the battery module 100.

Next, a battery module and a battery pack including the same according to another embodiment of the present disclosure will be described.

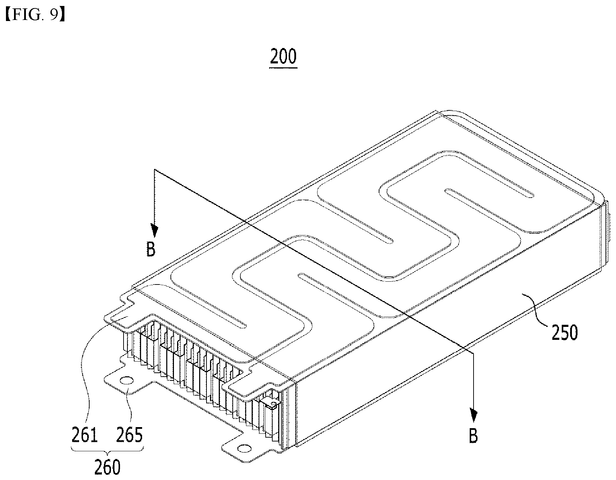

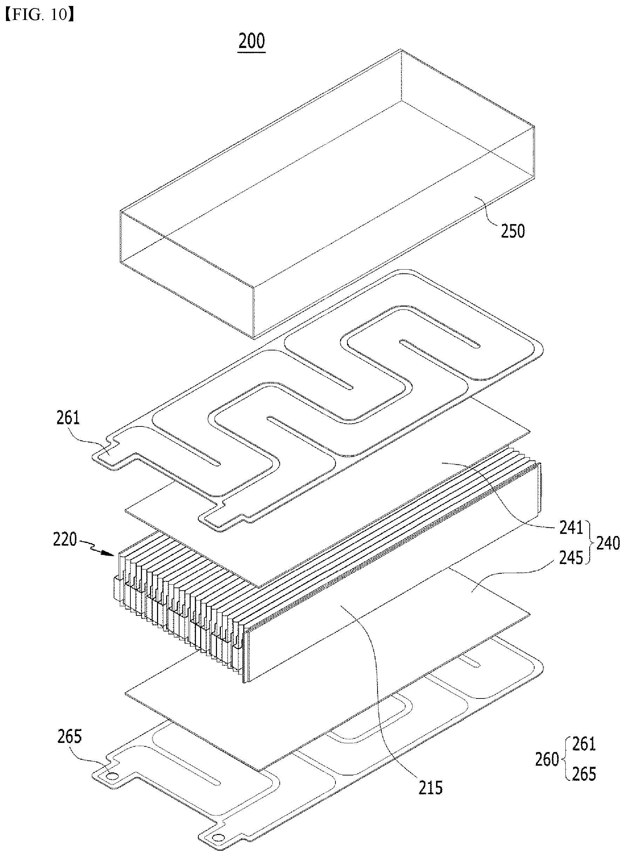

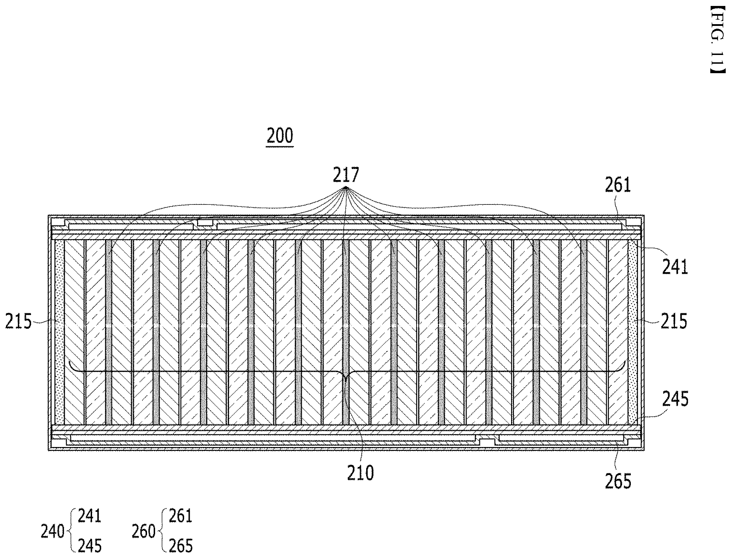

Fig. 9 is a perspective view of a battery module according to another embodiment of the present disclosure. Fig. 10 is an exploded perspective view of the battery module of Fig. 9. Fig. 11 is a diagram showing a cross-section taken along the cutting line B-B of Fig. 9.

Referring to Figs. 9 to 11, the battery module 200 according to another embodiment of the present disclosure include a battery cell stack 220 in which a plurality of battery cells 210 stacked in a first direction are stacked; heat sinks 260 each located on the upper and lower parts of the battery cell stack 220; thermal conductive resin layers 240 each located between the battery cell stack 220 and the heat sink 260; and an exterior member 250 surrounding the outer surface of the battery cell stack 220. Further, the battery module 200 includes a sensing member (not shown) that covers the front and rear surfaces of the battery cell stack 220.

Here, each component of the battery module 200 may be described similarly to the battery module 100 described above as in Figs. 1 to 8, and only the heat sink 260 and the thermal conductive resin layer 240 will be further described.

In the battery module 200 of the present embodiment, the heat sink 260 may include a first heat sink 261 and a second heat sink 265. Here, the first heat sink 261 may be located at the upper part of the battery cell stack 220, and the second heat sink 265 may be located at a lower part of the battery cell stack 220.

Thereby, in the battery module 200 according to the present embodiment, the heat sink 260 is located not only on the lower part of the battery cell stack 220 but also on the upper part of the battery cell stack 220, so that the cooling performance of the battery module 200 can be further improved, and the temperature deviation between the battery modules 200 can also be further reduced.

Further, in the battery module 200 of the present embodiment, the thermal conductive resin layer 240 may include a first thermal conductive resin layer 241 and a second thermal conductive resin layer 245. Here, the first thermal conductive resin layer 241 may be located between the first heat sink 261 and the upper part of the battery cell stack 120, and the second thermal conductive resin layer 245 may be located between the second heat sink 265 and the lower part of the battery cell stack 120.

That is, in the battery module 200 of the present embodiment, while the heat generated in the battery cell stack 220 being transferred and cooled to the first thermal conductive resin layer 241 and the first heat sink 261, it may be transferred to the second thermal conductive resin layer 245 and the second heat sink 265 and cooled. In other words, the heat generated in the battery cell stack 220 can be cooled upward by the first thermal conductive resin layer 241 and the first heat sink 261 and may be cooled downward by the second thermal conductive resin layer 245 and the second heat sink 265.

Therefore, according to the present embodiment, the heat generated in the battery cell 110 is cooled in the vertical direction of the battery cell stack 120, the cooling performance of the battery module 100 is further improved, and the cooling deviation between the battery cells 110 can also be further reduced. In addition, the lifespan of the battery module 100 can be further improved.

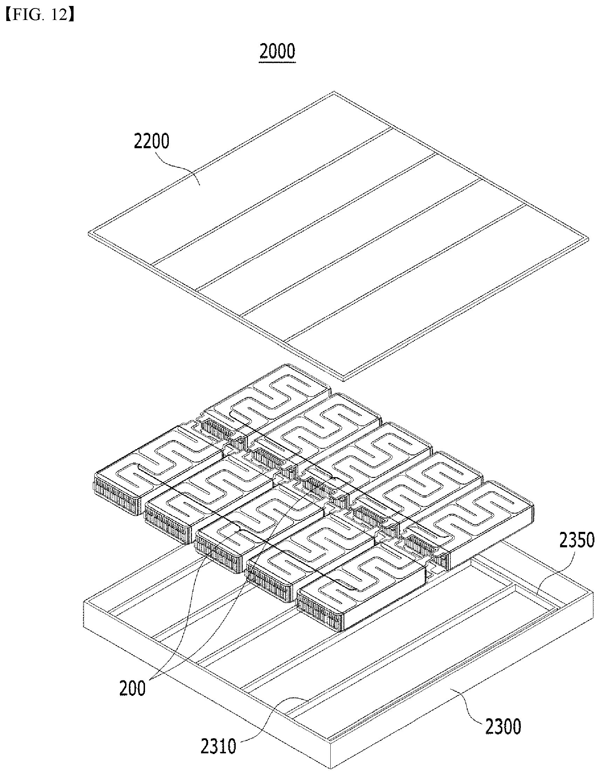

Fig. 12 is an exploded perspective view of the battery pack in which the battery module of Fig. 9 is mounted.

Referring to Fig. 12, the battery pack 2000 according to another embodiment of the present disclosure includes the battery module 200 described above, and one or more of the battery modules 200 can be packaged in the pack frames 2200 and 2300 to form the battery pack 2000. However, in the present embodiment, other parts except for the mounting of the battery module 200 may be described similarly to the battery pack 1000 described above with reference to Figs. 6 to 8.

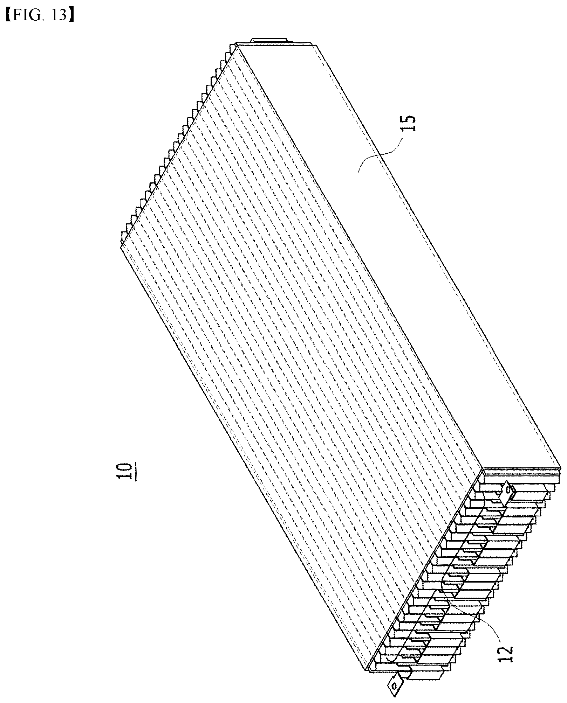

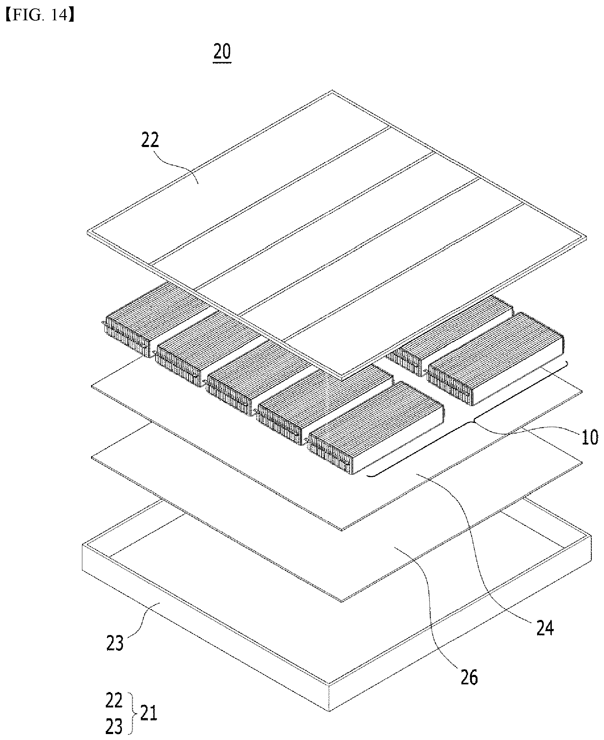

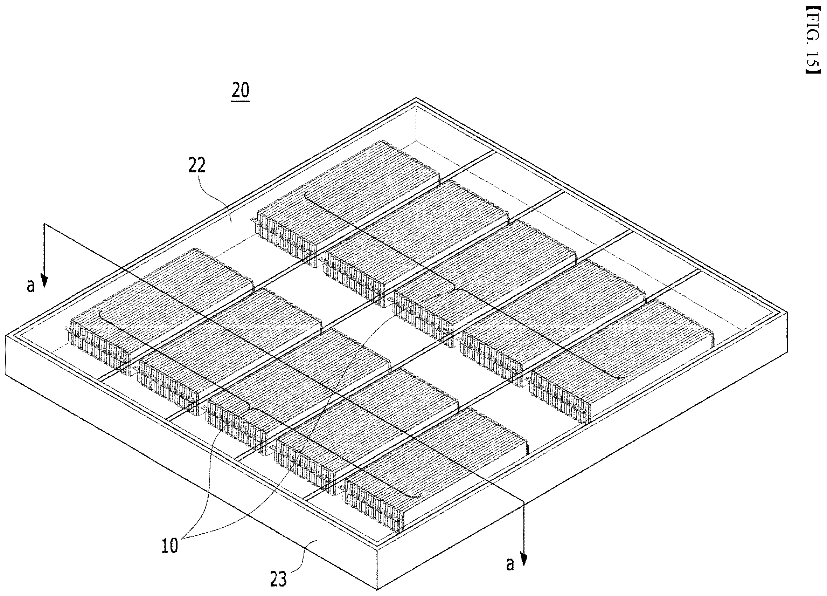

Fig. 13 is a perspective view of a battery module according to a comparative example. Fig. 14 is an exploded perspective view of a battery pack in which the battery module of Fig. 13 is mounted. Fig. 15 is a perspective view showing a state in which the components of the battery pack of Fig. 14 are assembled.

Referring to Fig. 13, the battery module 10 according to the comparative example includes a battery cell stack 12 in which a plurality of battery cells are stacked in one direction, and an exterior member 15 for housing the battery cell stack 12. Here, the exterior member 15 is opened in the front and rear surfaces, and the front and rear surfaces of the battery cell stack 12 housed in the exterior member 15 are opened.

Referring to Figs. 14 and 15, the battery module 10 is mounted on the pack frame member 21. Here, the pack frame member 21 includes an upper pack frame 22 and a lower pack frame 23 having an open upper surface, and a thermal conductive resin layer 24 and a heat sink 26 are attached on the lower pack frame 23. In addition, the battery module 10 is mounted on the thermal conductive resin layer 24.

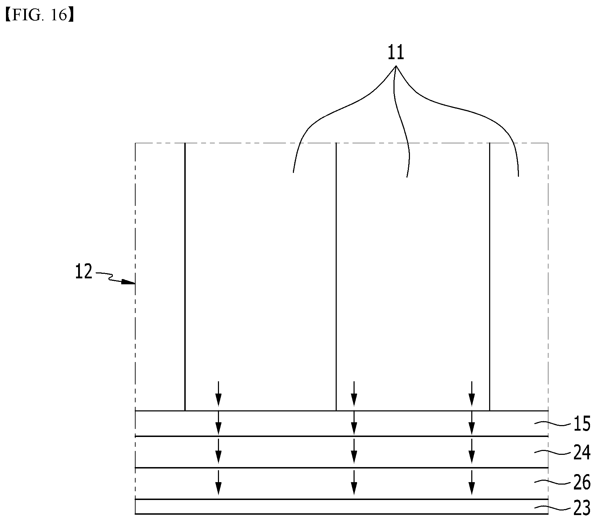

Fig. 16 is a diagram showing a part of a cross section taken along the cutting line a-a of Fig. 15.

Referring to Fig. 16, in the conventional battery module 10, the exterior member 15 is located between the battery cell stack 12 and the thermal conductive resin layer 24. That is, the battery module 10 has a structure that indirectly cools the lower part of the battery cell stack 12 through the thermal conductive resin layer 24 and the heat sink 26, and the heat generated in the battery cell flows through the exterior member 15 to the thermal conductive resin layer 14 and the heat sink 26. Here, the battery module 10 according to the comparative example has a problem that heat transfer is inhibited due to an air layer formed between the exterior member 15 and the battery cell stack 12 or between the exterior member 15 and the thermal conductive resin layer 24.

On the other hand, referring to Figs. 1 to 12, in the battery modules 100 and 200 according to an embodiment of the present disclosure, while the heat generated in the battery cells 110 and 210 being transferred to the thermal conductive resin layers 140 and 240 in direct contact with the lower or upper surfaces of the battery cell stacks 120 and 220, they are cooled by the heat sinks 160 and 260, whereby the cooling performance of the battery modules 100 and 200 can be improved, and the cooling deviation between the battery cells 110 and 210 can also be reduced. In addition, the lifespan of the battery modules 100 and 200 can be further improved.

The above-mentioned battery module and the battery pack including the same can be applied to various devices. Such a device may be applied to a vehicle means such as an electric bicycle, an electric vehicle, or a hybrid vehicle, but the present disclosure is not limited thereto, and is applicable to various devices that can use a battery module and the battery pack including the same, which also falls under the scope of the present disclosure.

Although the invention has been shown and described above with reference to the preferred embodiments, the scope of the present disclosure is not limited thereto, and numerous other modifications and improvements can be devised by those skilled in the art using the basic principles of the invention described in the appended claims.

### [Description of Reference Numerals]

100, 200: battery module
110, 210: battery cell
115, 215: compression pad
117, 217: cooling fin
120, 220: battery cell stack
140, 240: thermal conductive resin layer
160, 260: heat sink
1000, 2000: battery pack
1200, 2200: upper pack frame
1300, 2300: lower pack frame
1310, 2310: first beam
1350, 2350: second beam

## Claims

1. A battery module (100, 200) comprising:
a battery cell stack (120, 220) including a plurality of battery cells (110, 210) stacked in a first direction;
a first heat sink (160, 265) located at a lower part of the battery cell stack (120, 220);
a first thermal conductive resin layer (140, 245) located between the battery cell stack (120, 220) and the first heat sink (160, 265); and
an exterior member (150, 250) surrounding the outer surface of the battery cell stack (120, 220),
wherein the battery cell stack (120, 220) comprises at least one cooling fin (117, 217) located between battery cells (110, 210) adjacent to each other among the plurality of battery cells (110, 210),
wherein the first thermal conductive resin layer (140, 245) and the first heat sink (160, 265) are located between the exterior member (150, 250) and a lower surface of the battery cell stack (120, 220),
wherein the lower surface of the battery cell stack (120, 220) is in direct contact with the thermal conductive resin layer (140, 245),
wherein the thermal conductive resin layer (140, 245) is in contact with the heat sink (160, 265),
wherein a lower side surface of the cooling fin (117, 217) is in contact with the thermal conductive resin layer (140, 245),
wherein the first heat sink (160, 265) comprises a cooling flow path through which refrigerant may flow, and
wherein the cooling flow path and the first thermal conductive resin layer (140, 245) are in contact with each other.

2. The battery module according to claim 1, wherein:
an outer surface of the exterior member (150, 250) of the battery module (100, 200) is exposed.

3. The battery module according to claim 2, wherein:
the exterior member (150, 250) presses the upper and lower surfaces of the battery cell stack (120, 220) in a second direction, and
the second direction is perpendicular to the first direction.

4. The battery module according to claim 3, wherein:
the second direction is a width direction of the plurality of battery cells (110, 210).

5. The battery module according to claim 4, wherein:
the exterior member (150, 250) is made of an elastic material.

6. The battery module according to claim 5, wherein:
the exterior member (150, 250) is made of an elastic material, and
the exterior member (150, 250) is formed such that the film of the elastic material wraps the outer surface of the battery cell stack (120, 220).

7. The battery module according to claim 5, wherein:
the exterior member (150, 250) is made of a heat-shrinkable tube, and
front and back surfaces of the heat-shrinkable tube are opened.

8. The battery module according to claim 4, wherein:
a first adhesive layer is located between the cooling fins (117, 217) and the battery cell (110, 210).

9. The battery module according to claim 4, wherein:
the battery module (100, 200) further comprises compression pads (115, 215) located on both side surfaces of the battery cell stack (120, 220), and
the compression pad (115, 215) is located between the exterior member (150, 250) and the outside surface of the battery cell stack (120, 220).

10. The battery module according to claim 9, wherein:
a second adhesive layer is located between the compression pad (115, 215) and the battery cell (110, 210).

11. The battery module according to claim 1, wherein:
the battery module further comprises a second heat sink (261) located on the upper part of the battery cell stack (120, 220) and a second thermal conductive resin layer (241) located between the battery cell stack (120, 220) and the second heat sink (261), and
the second thermal conductive resin layer (241) and the second heat sink (261) are located between the exterior member (150, 250) and an upper surface of the battery cell stack (120, 220).

12. The battery module according to claim 11, wherein:
an upper side surface of the cooling fin (117, 217) is in contact with the second thermal conductive resin layer (241).

13. A battery pack (1000, 2000) in which the battery module (100, 200) of claim 1 is mounted on a pack frame (1200, 1300, 2200, 2300), and an outer surface of the exterior member (150, 250) and the pack frame (1200, 1300, 2200, 2300) are in contact with each other.

14. The battery pack according to claim 13, wherein:
the pack frame (1200, 1300, 2200, 2300) comprises a lower pack frame (1300, 2300) on which at least two of the battery modules (100, 200) are mounted and an upper pack frame (1200, 2200) for covering the upper parts of the at least two battery modules (100, 200), and comprises a plurality of first beams (1310, 2310) extending from one side surface of the lower pack frame (1300, 2300) towards the other side surface.

15. The battery pack according to claim 14, wherein:
the battery module (100, 200) is mounted between the first beams (1310, 2310) that are adjacent to each other among the plurality of first beams (1310, 2310).

16. The battery pack according to claim 15, wherein:
the lower pack frame (1300, 2300) further comprises a plurality of second beams (1350, 2350) perpendicular to the first beam (1310, 2310), and
the plurality of second beams (1350, 2350) are respectively located between one surface of the battery module (100, 200) and a side surface of the lower pack frame (1300, 2300),

17. The battery pack according to claim 16, wherein:
one surface of the second beam (1350, 2350) is in contact with an electrode lead protruding from one surface of the battery module (100, 200).

18. The battery pack according to claim 17, wherein:
an insulating coating layer is formed on one surface of the second beam (1350, 2350).

## Patentansprüche

1. Batteriemodul (100, 200) aufweisend:
einen Batteriezellenstapel (120, 220) mit mehreren Batteriezellen (110, 210), die in einer ersten Richtung gestapelt sind;
eine erste Wärmesenke (160, 265), die an einem unteren Teil des Batteriezellenstapels (120, 220) angeordnet ist;
eine erste wärmeleitfähige Harzschicht (140, 245), die zwischen dem Batteriezellenstapel (120, 220) und der ersten Wärmesenke (160, 265) angeordnet ist; und
ein äußeres Element (150, 250), das die Außenfläche des Batteriezellenstapels (120, 220) umgibt,
wobei der Batteriezellenstapel (120, 220) mindestens eine Kühlrippe (117, 217) aufweist, die zwischen zueinander benachbarten Batteriezellen (110, 210) unter den mehreren Batteriezellen (110, 210) angeordnet ist,
wobei die erste wärmeleitfähige Harzschicht (140, 245) und die erste Wärmesenke (160, 265) zwischen dem äußeren Element (150, 250) und einer unteren Fläche des Batteriezellenstapels (120, 220) angeordnet sind,
wobei die untere Fläche des Batteriezellenstapels (120, 220) in direktem Kontakt mit der wärmeleitfähigen Harzschicht (140, 245) steht,
wobei die wärmeleitfähige Harzschicht (140, 245) in Kontakt mit der Wärmesenke (160, 265) steht,
wobei eine untere Seitenfläche der Kühlrippe (117, 217) in Kontakt mit der wärmeleitfähigen Harzschicht (140, 245) steht,
wobei die erste Wärmesenke (160, 265) einen Kühlströmungsweg aufweist, durch den Kältemittel strömen kann, und
wobei der Kühlströmungsweg und die erste wärmeleitfähige Harzschicht (140, 245) miteinander in Kontakt stehen.

2. Batteriemodul nach Anspruch 1, wobei:
eine Außenfläche des äußeren Elements (150, 250) des Batteriemoduls (100, 200) freiliegt.

3. Batteriemodul nach Anspruch 2, wobei:
das äußere Element (150, 250) die obere Fläche und die untere Fläche des Batteriezellenstapels (120, 220) in einer zweiten Richtung drückt, und
die zweite Richtung senkrecht zu der ersten Richtung ist.

4. Batteriemodul nach Anspruch 3, wobei:
die zweite Richtung eine Breitenrichtung der mehreren Batteriezellen (110, 210) ist.

5. Batteriemodul nach Anspruch 4, wobei:
das äußere Element (150, 250) aus einem elastischen Material hergestellt ist.

6. Batteriemodul nach Anspruch 5, wobei:
das äußere Element (150, 250) aus einem elastischen Material hergestellt ist, und
das äußere Element (150, 250) so ausgebildet ist, dass der Film aus dem elastischen Material die Außenfläche des Batteriezellenstapels (120, 220) umwickelt.

7. Batteriemodul nach Anspruch 5, wobei:
das äußere Element (150, 250) aus einem wärmeschrumpfbaren Rohr hergestellt ist, und
eine Vorderfläche und eine Rückfläche des wärmeschrumpfbaren Rohrs geöffnet sind.

8. Batteriemodul nach Anspruch 4, wobei:
eine erste Klebeschicht zwischen den Kühlrippen (117, 217) und der Batteriezelle (110, 210) angeordnet ist.

9. Batteriemodul nach Anspruch 4, wobei:
das Batteriemodul (100, 200) ferner Kompressionspads (115, 215) aufweist, die an beiden Seitenflächen des Batteriezellenstapels (120, 220) angeordnet sind, und
das Kompressionspad (115, 215) zwischen dem äußeren Element (150, 250) und der Außenfläche des Batteriezellenstapels (120, 220) angeordnet ist.

10. Batteriemodul nach Anspruch 9, wobei:
eine zweite Klebeschicht zwischen dem Kompressionspad (115, 215) und der Batteriezelle (110, 210) angeordnet ist.

11. Batteriemodul nach Anspruch 1, wobei:
das Batteriemodul ferner eine zweite Wärmesenke (261), die an dem oberen Teil des Batteriezellenstapels (120, 220) angeordnet ist, und eine zweite wärmeleitfähige Harzschicht (241) aufweist, die zwischen dem Batteriezellenstapel (120, 220) und der zweiten Wärmesenke (261) angeordnet ist, und
die zweite wärmeleitfähige Harzschicht (241) und die zweite Wärmesenke (261) zwischen dem äußeren Element (150, 250) und einer oberen Fläche des Batteriezellenstapels (120, 220) angeordnet sind.

12. Batteriemodul nach Anspruch 11, wobei:
eine obere Seitenfläche der Kühlrippe (117, 217) in Kontakt mit der zweiten wärmeleitfähigen Harzschicht (241) steht.

13. Batteriepack (1000, 2000), bei dem das Batteriemodul (100, 200) nach Anspruch 1 an einem Packrahmen (1200, 1300, 2200, 2300) montiert ist und eine Außenfläche des äußeren Elements (150, 250) und der Packrahmen (1200, 1300, 2200, 2300) miteinander in Kontakt stehen.

14. Batteriepack nach Anspruch 13, wobei:
der Packrahmen (1200, 1300, 2200, 2300) einen unteren Packrahmen (1300, 2300), an dem mindestens zwei der Batteriemodule (100, 200) montiert sind, und einen oberen Packrahmen (1200, 2200) zum Abdecken der oberen Teile der mindestens zwei Batteriemodule (100, 200) aufweist und mehrere erste Träger (1310, 2310) aufweist, die sich von einer Seitenfläche des unteren Packrahmens (1300, 2300) zu der anderen Seitenfläche erstrecken.

15. Batteriepack nach Anspruch 14, wobei:
das Batteriemodul (100, 200) zwischen den ersten Trägern (1310, 2310), die zueinander benachbart sind, unter den mehreren ersten Trägern (1310, 2310) montiert ist.

16. Batteriepack nach Anspruch 15, wobei:
der untere Packrahmen (1300, 2300) ferner mehrere zweite Träger (1350, 2350) senkrecht zu dem ersten Träger (1310, 2310) aufweist, und
die mehreren zweiten Träger (1350, 2350) jeweils zwischen einer Fläche des Batteriemoduls (100, 200) und einer Seitenfläche des unteren Packrahmens (1300, 2300) angeordnet sind.

17. Batteriepack nach Anspruch 16, wobei:
eine Fläche des zweiten Trägers (1350, 2350) in Kontakt mit einer Elektrodenleitung steht, die von einer Fläche des Batteriemoduls (100, 200) vorsteht.

18. Batteriepack nach Anspruch 17, wobei:
eine isolierende Beschichtungsschicht auf einer Fläche des zweiten Trägers (1350, 2350) ausgebildet ist.

## Revendications

1. Module de batterie (100, 200) comprenant :
un empilement de cellules de batterie (120, 220) incluant une pluralité de cellules de batterie (110, 210) ) empilées dans une première direction ;
un premier dissipateur thermique (160, 265) situé à une partie inférieure de l'empilement de cellules de batterie (120, 220) ;
une première couche de résine thermoconductrice (140, 245) située entre l'empilement de cellules de batterie (120, 220) et le premier dissipateur thermique (160, 265) ; et
un élément extérieur (150, 250) entourant la surface extérieure de l'empilement de cellules de batterie (120, 220),
dans lequel l'empilement de cellules de batterie (120, 220) comprend une ou plusieurs ailettes de refroidissement (117, 217) situées entre des cellules de batterie (110, 210) adjacentes les unes aux autres parmi la pluralité de cellules de batterie (110, 210),
dans lequel la première couche de résine thermoconductrice (140, 245) et le premier dissipateur thermique (160, 265) sont situés entre l'élément extérieur (150, 250) et une surface inférieure de l'empilement de cellules de batterie (120, 220),
dans lequel la surface inférieure de l'empilement de cellules de batterie (120, 220) est en contact direct avec la couche de résine thermoconductrice (140, 245),
dans lequel la couche de résine thermoconductrice (140, 245) est en contact avec le dissipateur thermique (160, 265),
dans lequel une surface latérale inférieure de l'ailette de refroidissement (117, 217) est en contact avec la couche de résine thermoconductrice (140, 245),
dans lequel le premier dissipateur thermique (160, 265) comprend un trajet de flux de refroidissement par lequel un réfrigérant peut s'écouler, et
dans lequel le trajet de flux de refroidissement et la première couche de résine thermoconductrice (140, 245) sont en contact l'un avec l'autre.

2. Module de batterie selon la revendication 1, dans lequel :
une surface extérieure de l'élément extérieur (150, 250) du module de batterie (100, 200) est exposée.

3. Module de batterie selon la revendication 2, dans lequel :
l'élément extérieur (150, 250) presse les surfaces supérieure et inférieure de l'empilement de cellules de batterie (120, 220) dans une deuxième direction, et
la deuxième direction est perpendiculaire à la première direction.

4. Module de batterie selon la revendication 3, dans lequel :
la deuxième direction est une direction de largeur de la pluralité de cellules de batterie (110, 210).

5. Module de batterie selon la revendication 4, dans lequel :
l'élément extérieur (150, 250) est fabriqué avec un matériau élastique.

6. Module de batterie selon la revendication 5, dans lequel :
l'élément extérieur (150, 250) est fabriqué avec un matériau élastique, et
l'élément extérieur (150, 250) est formé de telle sorte que le film du matériau élastique entoure la surface extérieure de l'empilement de cellules de batterie (120, 220).

7. Module de batterie selon la revendication 5, dans lequel :
l'élément extérieur (150, 250) est fabriqué avec un tube à contraction thermique, et
les surfaces avant et arrière du tube à contraction thermique sont ouvertes.

8. Module de batterie selon la revendication 4, dans lequel :
une première couche adhésive est située entre les ailettes de refroidissement (117, 217) et la cellule de batterie (110, 210).

9. Module de batterie selon la revendication 4, dans lequel :
le module de batterie (100, 200) comprend en outre des coussinets de compression (115, 215) situés sur les deux surfaces latérales de l'empilement de cellules de batterie (120, 220), et
le coussinet de compression (115, 215) est situé entre l'élément extérieur (150, 250) et la surface extérieure de l'empilement de cellules de batterie (120, 220).

10. Module de batterie selon la revendication 9, dans lequel :
une deuxième couche adhésive est située entre le coussinet de compression (115, 215) et la cellule de batterie (110, 210).

11. Module de batterie selon la revendication 1, dans lequel :
le module de batterie comprend en outre un deuxième dissipateur thermique (261) situé sur la partie supérieure de l'empilement de cellules de batterie (120, 220) et une deuxième couche de résine thermoconductrice (241) située entre l'empilement de cellules de batterie (120, 220) et le deuxième dissipateur thermique (261), et
la deuxième couche de résine thermoconductrice (241) et le deuxième dissipateur thermique (261) sont situés entre l'élément extérieur (150, 250) et une surface supérieure de l'empilement de cellules de batterie (120, 220).

12. Module de batterie selon la revendication 11, dans lequel :
une surface latérale supérieure de l'ailette de refroidissement (117, 217) est en contact avec la deuxième couche de résine thermoconductrice (241).

13. Bloc-batterie (1000, 2000) dans lequel le module de batterie (100, 200) selon la revendication 1 est monté sur un cadre de bloc-batterie (1200, 1300, 2200, 2300), et une surface extérieure de l'élément extérieur (150, 250) et le cadre de bloc-batterie (1200, 1300, 2200, 2300) sont en contact l'un avec l'autre.

14. Bloc-batterie selon la revendication 13, dans lequel :
le cadre de bloc-batterie (1200, 1300, 2200, 2300) comprend un cadre de bloc-batterie inférieur (1300, 2300) sur lequel au moins deux des modules de batterie (100, 200) sont montés et un cadre de bloc-batterie supérieur (1200, 2200) pour couvrir les parties supérieures des deux modules de batterie (100, 200) ou plus, et comprend une pluralité de premières barres (1310, 2310) s'étendant d'une surface latérale du cadre de bloc-batterie inférieur (1300, 2300) vers l'autre surface latérale.

15. Bloc-batterie selon la revendication 14, dans lequel :
le module de batterie (100, 200) est monté entre les premières barres (1310, 2310) qui sont adjacentes les unes aux autres parmi la pluralité de premières barres (1310, 2310).

16. Bloc-batterie selon la revendication 15, dans lequel :
le cadre de bloc-batterie inférieur (1300, 2300) comprend en outre une pluralité de deuxièmes barres (1350, 2350) perpendiculaires à la première barre (1310, 2310), et
la pluralité de deuxièmes barres (1350, 2350) sont situées respectivement entre une surfaces du module de batterie (100, 200) et une surface latérale du cadre de bloc-batterie inférieur (1300, 2300),

17. Bloc-batterie selon la revendication 16, dans lequel :
une surface de la deuxième barre (1350, 2350) est en contact avec un câble d'électrode saillant d'une surface du module de batterie (100, 200).

18. Bloc-batterie selon la revendication 17, dans lequel :
une couche de revêtement isolante est formée sur une surface de la deuxième barre (1350, 2350).
